# EUROPÄISCHE PATENTSCHRIFT

(11) **EP 2 193 215 B1**
(45) Veröffentlichungstag und Bekanntmachung des Hinweises auf die Patenterteilung: **12.01.2011**
(21) Anmeldenummer: 08801902.1
(22) Anmeldetag: 08.09.2008
(51) Int. Cl.: C23C 2/00, F16C 33/76

(54) **SCHMELZTAUCHBESCHICHTUNGSANLAGE**
HOT-DIP COATING INSTALLATION
INSTALLATION DE REVÊTEMENT PAR IMMERSION DANS UN BAIN DE FUSION

(30) Priorität: 21.09.2007 DE 102007045200
(43) Veröffentlichungstag der Anmeldung: 09.06.2010
(73) Patentinhaber: SMS Siemag AG, 40237 Düsseldorf (DE)
(72) Erfinder: DE KOCK, Peter, 46117 Oberhausen (DE); JABS, Ronald, 47447 Moers (DE)
(74) Vertreter: Klüppel, Walter
(86) Internationale Anmeldenummer: PCT/EP2008/007320
(87) Internationale Veröffentlichungsnummer: WO 2009/039950

(56) Entgegenhaltungen:
- WO-A-99/61356
- WO-A-2006/002822
- DE-A1- 4 307 282

## Beschreibung

Die Erfindung betrifft eine Schmelztauchbeschichtungsanlage zum Beschichten eines Bandes mit einem flüssigen Metall.

Im Stand der Technik sind Schmelztauchbeschichtungsanlagen grundsätzlich bekannt. Bei diesen Anlagen wird ein zu beschichtendes Band, insbesondere Stahlband durch ein Bad mit flüssigem Metall geleitet. Zur Führung und Beeinflussung der Bandform und der Bandlage befinden sich verschiedene Rollen an geeigneten Stellen in dem Metallbad. Bei den Rollen kann es sich zum einen um eine Umlenkrolle handeln, um welche das Band nach seinem Eintritt in das flüssige Metall umgelenkt wird, bevor es das Bad wieder verlässt. Neben der Umlenkrolle können auch kleinere Korrigier- und Stabilisierungsrollen vorgesehen sein, die mit einem im Vergleich zur Umlenkrolle nur relativ kleinen Umschlingungswinkel an das Band angestellt sind. Aufgrund der kleinen Umschlingungswinkel sind die antreibenden Kräfte für diese Rollen nur gering.

Die Druckschrift DE 43 07 282 A1 offenbart eine Schmelztauchbeschichtungsanlage zur Beschichtung bandförmigen Behandlungsguts. Die Anlage weist eine Führungsrolle mit einem nach außen abgeschotteten und damit gegenüber dem flüssigen Metall dichten Hohlraum. Die Rolle weist einen Tragzapfen zum Lagern desselben auf. Der Tragzapfen weist eine Bohrung bzw. Zuleitung auf, durch die ein Schutzgas in das Lagergehäuse eingeleitet werden kann.

Die Druckschrift WO 99/61356 A betrifft eine Rollenanordnung für in einem flüssigen Metallbad zu beschichtendes Behandlungsgut. Zur Abdichtung des Lagergehäuses gegen die Rolle sind an einem radial vorstehenden Absatz der Rolle und am Lagergehäuse sich quer zur Rollenachse erstreckende Dichtungsflächen ausgebildet, so dass ein Eindringen von flüssigem Metall in das Lagergehäuse sicher verhindert werden kann. Gemäß einer Ausführungsform der Erfindung ist vorgesehen, dass der radiale Absatz an dem in das Lagergehäuse eingreifenden Endabschnitt der Rolle vorgesehen ist, d. h. die Abdichtung auf der Innenseite des Lagergehäuses erfolgt. In diesem Fall mündet vorzugsweise eine Gasleitung in das Lagergehäuse, um dem Lagergehäuse unter Erzeugung eines Überdrucks Gas zuzuführen und über den Überdruck den radialen Rollenabsatz in Richtung der Dichtungsfläche des Lagergehäuses zu drücken.

Die einleitend beschriebene Schmelztauchbeschichtungsanlage ist zum Beispiel aus der internationalen Patentanmeldung WO 2006/002822 bekannt. Die dort offenbarte Schmelztauchbeschichtungsanlage umfasst eine Rolle in Form einer Umlenk- oder Führungsrolle, die als Hohlkörper ausgebildet ist. Die Rolle ist an Rollentragarmen mittels einem Lager drehbar gelagert. Das Lager ist in einem Raumbereich an der Peripherie des Zapfens der Rolle angebracht. Zum Entlüften dieses Raumbereiches sind eine zuleitende und eine ableitende Lüftungsbohrung vorgesehen. Die Rolle ist als Hohlrolle ausgebildet mit Öffnungen an ihren Stirnseiten. Über diese Öffnungen füllt sich die Rolle beim Betrieb der Schmelztauchbeschichtungsanlage, das heißt, wenn sie in das Metallbad eingetaucht ist, mit dem flüssigen Metall, zum Beispiel Zink.

Die Befüllung der Rolle mit dem flüssigen Metall verhindert vorteilhafterweise, dass sich die Luft in der ansonsten geschlossenen Hohlrolle aufgrund der vergleichsweise hohen Temperatur des umgebenden flüssigen Metalls ausdehnen und unter Umständen zu einer unerwünschten Verformung der Rolle führen würde.

Allerdings hat die beschriebene bekannte Ausgestaltung der Rolle in der Praxis auch Nachteile. So erzeugt die an ihren Stimseiten offene, mit flüssigem Metall gefüllte Rolle speziell bei höheren Produktionsgeschwindigkeiten, das heißt bei höheren Drehgeschwindigkeiten durch hydraulische Pumpverluste im Innern und an den gelochten Stirnseiten einen erheblichen Widerstand. Dadurch kann die Rolle einen Schlupf zwischen dem zu beschichtenden Band und der Rollenoberfläche erzeugen. Diese Differenz in den Bewegungsgeschwindigkeiten verursacht Beschädigungen an der Bandoberfläche. Das flüssige Metall im Innern der Hohlrolle führt zu einem erhöhten Massenträgheitsmoment der Rolle und begünstigt dadurch den Schlupf.

Ausgehend von diesem Stand der Technik liegt der Erfindung die Aufgabe zugrunde, eine Schmelztauchbeschichtungsanlagen zum Beschichten eines Bandes mit einem flüssigen Metall dahingehend weiter zu bilden, dass der Rotationswiderstand, das Massenträgheitsmoment und die Schlupfneigung einer Umlenk-, Korrigier-, oder Stabilisierungsrolle dieser Anlage verringert wird.

Diese Aufgabe wird durch den Gegenstand des Anspruchs 1 gelöst. Demnach ist die Schmelztauchbeschichtungsanlage dadurch gekennzeichnet, dass der hohle Innenraum der Rolle dicht gegenüber dem umgebenden flüssigen Metall ausgebildet ist und dass ein Kanal vorgesehen ist, welcher den Innenraum der Rolle mit dem Raumbereich an der Peripherie des Rollenzapfens verbindet.

Aufgrund ihrer Abgeschlossenheit kann kein flüssiges Metall von Außen in den hohlen Innenraum der Rolle eindringen; der Innenraum der Rolle bleibt deshalb nur mit einem Gas, zum Beispiel mit Luft gefüllt. Dies hat den Vorteil, dass zum einen das Trägheitsmoment der Rolle und damit ihre Schlupfneigung deutlich geringer sind als bei mit Schmelze gefüllten Rollen im Stand der Technik. Hinzu kommt als weiterer Vorteil, dass aufgrund der fehlenden Öffnungen zum flüssigen Metall hin der Rotationswiderstand bei der erfindungsgemäßen Rolle deutlich geringer ist als bei Rollen mit diesen Öffnungen. Gleichzeitig wird durch den erfindungsgemäßen Kanal eine Belüftung des Innenraumes sichergestellt, so dass über den Kanal ein Druckausgleich zwischen dem Innenraum und dem Raumbereich erfolgen kann. Der Aufbau eines Überdrucks in dem Innenraum, der sich dort grundsätzlich aufgrund der hohen Temperaturen des umgebenden Metalls einstellen könnte, wird durch den Kanal als Verbindung zwischen dem Innenraum und dem Raumbereich wirksam verhindert. Eine Deformation des Mantels der Rolle durch unzulässig großen Überdruck ist somit ausgeschlossen.

Gemäß einem ersten Ausführungsbeispiel umfasst die Schmelztauchbeschichtungsanlage eine Gasquelle zum Beaufschlagen des Raumbereiches und über den Kanal auch des Innenraumes der Rolle mit einem vorbestimmten Gasdruck. Dann erfolgt über den Kanal ein Druckausgleich in Höhe dieses vorbestimmten Gasdrucks. Alternativ dazu kann die erfindungsgemäße Schmelztauchbeschichtungsanlage auch eine Belüftungsleitung aufweisen, welche den Raumbereich dem Atmosphärendruck aussetzt. Dann wird auch der Innenraum der Rolle über den Kanal dem Atmosphärendruck ausgesetzt.

Der Kanal ist vorteilhafterweise im Form einer Bohrung durch den Rollenzapfen ausgebildet.

Bei dem Band handelt es sich vorzugsweise um ein Metallband, insbesondere ein Stahlband.

Besonders einfach ist die Erfindung insbesondere bei bestehenden Schmelztauchbeschichtungsanlagen nachzurüsten, bei denen die Rollen bereits in gasbeaufschlagten Wälzlagern gelagert sind, weil bei dieser Lagerungsart bereits der Raumbereich und die zuführenden und abführenden Gasleitungen vorhanden sind. Aber die Erfindung ist auch bei andern Lagerungsarten prinzipiell anwendbar.

Der Beschreibung ist eine Figur beigefügt, welche einen Querschnitt durch eine erfindungsgemäße Schmelztauchbeschichtungsanlage zeigt.

Die Erfindung wird nachfolgend in Form von Ausführungsbeispielen unter Bezugnahme auf diese Figur detailliert beschrieben.

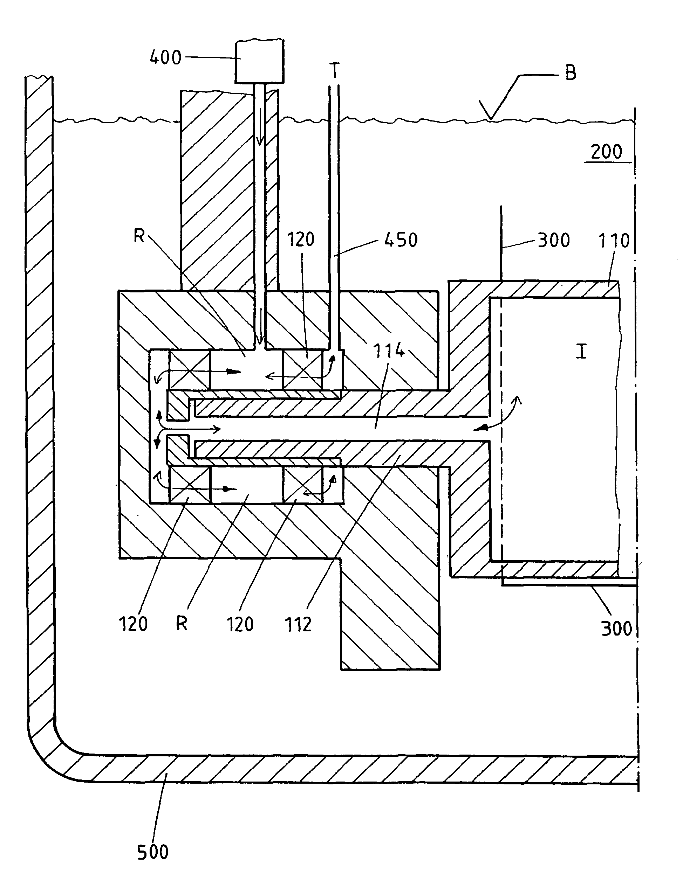

Die Figur zeigt einen Querschnitt durch eine Schmelztauchbeschichtungsanlage zum Beschichten eines Bandes 300, insbesondere einem Stahlband, mit einem flüssigen Metall 200. Die Schmelztauchbeschichtungsanlage umfasst einen Behälter 500 mit dem flüssigen Metall, in welches eine Rolle 110 - gelagert an einem Tragarm - eingetaucht ist. Die Rolle 110 ist in der Figur beispielhaft als Umlenkrolle ausgebildet zum Umlenken des Bandes in dem flüssigen Metall 200. Die Rolle 110 ist als Hohlkörper mit einem Innenraum I ausgebildet und gegenüber dem umgebenden flüssigen Metall 200 abgedichtet. Die Rolle 110 besitzt einen Rollenzapfen 112, über den sie in einem Lager 120, vorzugsweise ein Wälzlager, gelagert ist. Das Lager 120 ist an der Peripherie des Rollenzapfens angebracht und von einem Raumbereich R umgeben. Erfindungsgemäß ist der Innenraum I der Rolle 110 über einen Kanal 114 mit dem Raumbereich R verbunden.

Gemäß einem ersten Ausführungsbeispiel ist der Raumbereich R an einer Gasquelle 400 angeschlossen und wird von dieser mit einem Gas mit einem vorbestimmten Gasdruck beaufschlagt. Auf diese Weise wird verhindert, dass flüssiges Metall in den Raumbereich eindringen und das Lager 120 beschädigen kann. Die Gasquelle 400 und der Raumbereich R sind vorzugsweise Teil eines geschlossenen Gas-Regelkreises, welcher gewährleistet, dass der Gasdruck in dem Raumbereich zum Beispiel konstant gehalten wird. Über den erfindungsgemäßen kommunizierenden Kanal 114 wird sichergestellt, dass der Innenraum I der Rolle nur dem vorbestimmten Gasdruck - und nicht etwa einem unerwünscht hohen Überdruck - ausgesetzt ist. Auf diese Weise wird eine unerwünschte Deformation der Oberfläche der Rolle und damit eine Beschädigung des Bandes 300 vermieden.

Alternativ zu dem Vorsehen einer künstlichen Gasquelle oder des Gas-Regelkreises kann der Raumbereich gemäß einem zweiten preisgünstigeren Ausführungsbeispiel auch lediglich mit einer Belüftungsleitung 450 dem Atmosphärendruck ausgesetzt sein. Über den erfindungsgemäßen Kanal 114 ist dann auch der Innenraum I der Rolle 110 belüftet und dem Atmosphärendruck ausgesetzt, so dass auch auf diese Weise ein Überdruck verhindert wird.

Das Bezugzeichen B bezeichnet den Badspiegels des flüssigen Metalls 200.

## Patentansprüche

1. Schmelztauchbeschichtungsanlage zum Beschichten eines Bandes (300) mit einem zunächst flüssigen Metall (200), wobei die Anlage aufweist:
eine als Hohlkörper mit einem Innenraum (I) ausgebildete Rolle (110) zum Umlenken oder Stabilisieren des Bandes während seiner Beschichtung, wobei die Rolle einen Rollenzapfen (112) aufweist; und
ein Lager (120) in einem Raumbereich (R) an der Peripherie des Rollenzapfens (112) zum Lagern des Rollenzapfens;
**dadurch gekennzeichnet,**
**dass** der Innenraum (I) der Rolle (110) dicht gegenüber dem flüssigen Metall (200) ausgebildet ist; und
**dass** ein Kanal (114) vorgesehen ist, welcher den Innenraum (I) der Rolle (110) mit dem Raumbereich (R) an der Peripherie des Rollenzapfens verbindet.

2. Schmelztauchbeschichtungsanlage nach Anspruch 1,
**dadurch gekennzeichnet,**
**dass** der Kanal (114) in Form einer Bohrung durch den Rollenzapfen (112) ausgebildet ist.

3. Schmelztauchbeschichtungsanlage nach Anspruch 1 oder 2,
**gekennzeichnet durch**,
eine Gasquelle (400) zum Beaufschlagen des Raumbereiches (R) und über den Kanal (114) auch des Innenraums (I) der Rolle mit einem Gas mit einem vorbestimmten Gasdruck.

4. Schmelztauchbeschichtungsanlage nach Anspruch 3,
**gekennzeichnet durch**,
einen Regelkreis zum Regeln, beispielsweise zum Konstanthalten des Gasdrucks in dem Raumbereich und dem Innenraum.

5. Schmelztauchbeschichtungsanlage nach Anspruch 1 oder 2,
**gekennzeichnet durch**,
eine Belüftungsleitung (450), welche den Raumbereich (R) und über den Kanal (114) auch den Innenraum (I) der Rolle dem Atmosphärendruck aussetzt.

6. Schmelztauchbeschichtungsanlage nach einem der vorangegangenen Ansprüche,
**gekennzeichnet durch**,
einen Behälter (500) für das flüssige Metall, wobei die Rolle (112) und der Raumbereich (R) während des Betriebs der Anlage in das flüssige Metall eingetaucht sind; wobei jedoch der Raumbereich (R) gegenüber dem flüssigen Metall (200) abgedichtet ist und zum Freihalten des Lagers von dem flüssigen Metall fungiert.

7. Schmelztauchbeschichtungsanlage nach einem der vorangegangenen Ansprüche,
**dadurch gekennzeichnet,**
**dass** das Band ein Metallband, zum Beispiel ein Stahlband ist.

## Claims

1. Hot-dip coating plant for coating a strip (300) with an initially liquid metal (200), wherein the plant comprises:
a roller (110), which is constructed as a hollow body with an interior space (I), for deflecting or stabilising the strip during coating thereof, wherein the roller has a roller pin (112); and
a bearing (12) in a spatial region (R) at the periphery of the roller pin (112) for mounting the roller pin;
**characterised in that** the interior space (I) of the roller (110) is constructed to be sealed relative to the liquid metal (200); and
a channel (114), which connects the interior space (I) of the roller (110) with the spatial region (R) at the periphery of the roller pin, is provided.

2. Hot-dip coating plant according to claim 1, **characterised in that** the channel (114) is constructed in the form of a bore through the roller pin (112).

3. Hot-dip coating plant according to claim 1 or 2, **characterised by** a gas source (400) for loading the spatial region (R) and also, by way of the channel (114), the interior space (I) of the roller with a gas at a predetermined gas pressure.

4. Hot-dip coating plant according to claim 3, **characterised by** a regulating circuit for regulating, for example keeping constant, the gas pressure in the spatial region and in the interior space.

5. Hot-dip coating plant according to claim 1 or 2, **characterised by** a ventilation duct (450) exposing the spatial region (R) and, by way of the channel (114), also the interior space (I) of the roller to atmospheric pressure.

6. Hot-dip coating plant according to any one of the preceding claims, **characterised by** a container (500) for the liquid metal, wherein the roller (112) and the spatial region (R) are immersed in the liquid metal during operation of the plant; but wherein the spatial region (R) is sealed off relative to the liquid metal (200) and functions to keep the bearing free of the liquid metal.

7. Hot-dip coating plant according to any one of the preceding claims, **characterised in that** the strip is a metal strip, for example a steel strip.

## Revendications

1. Installation de revêtement par immersion dans une masse fondue pour le revêtement d'une bande (300) avec un métal (200) liquide au départ, l'installation présentant :
- un rouleau (110) réalisé sous forme de corps creux avec un espace interne (I) pour la déviation ou la stabilisation de la bande pendant son revêtement, le rouleau présentant un tourillon (112) ; et
- un palier (120) dans une zone spatiale (R) à la périphérie du tourillon (112) pour loger le tourillon ;
**caractérisée**
**en ce que** l'espace interne (I) du rouleau (110) est réalisé en étant étanche au métal liquide (200) ; et
**en ce qu'**on a prévu un canal (114) qui relie l'espace interne (I) du rouleau (110) à la zone spatiale (R) située à la périphérie du tourillon.

2. Installation de revêtement par immersion dans une masse fondue selon la revendication 1, **caractérisée**
**en ce que** le canal (114) est réalisé sous forme d'un trou au travers du tourillon (112).

3. Installation de revêtement par immersion dans une masse fondue selon la revendication 1 ou 2, **caractérisée par**
une source de gaz (400) destinée à alimenter un gaz avec une pression gazeuse prédéterminée dans la zone spatiale (R) et via le canal (114) également dans l'espace interne (I) du rouleau.

4. Installation de revêtement par immersion dans une masse fondue selon la revendication 3, **caractérisée par**
un circuit de régulation pour la régulation, par exemple le maintien constant de la pression de gaz dans la zone spatiale et dans l'espace interne.

5. Installation de revêtement par immersion dans une masse fondue selon la revendication 1 ou 2, **caractérisée par**
une conduite d'aération (450), qui met la zone spatiale (R) et via le canal (114) également l'espace interne (I) du rouleau à la pression atmosphérique.

6. Installation de revêtement par immersion dans une masse fondue selon l'une quelconque des revendications précédentes, **caractérisée par**
un récipient (500) pour le métal liquide, le rouleau (112) et la zone spatiale (R) étant immergés dans le métal liquide pendant le fonctionnement de l'installation ; la zone spatiale étant cependant étanche par rapport au métal liquide (200) et fonctionnant pour protéger le palier contre le métal liquide.

7. Installation de revêtement par immersion dans une masse fondue selon l'une quelconque des revendications précédentes, **caractérisée en ce que** la bande est une bande métallique, par exemple une bande en acier.
